# EUROPEAN PATENT SPECIFICATION

(11) **EP 3 026 748 B1**
(45) Date of publication and mention of the grant of the patent: **19.04.2017**
(21) Application number: 15196267.7
(22) Date of filing: 25.11.2015
(51) Int. Cl.: H01M 8/0612, H01M 8/0662, C01B 3/38, H01M 8/04223, H01M 8/04992, H01M 8/0432, H01M 8/0438, H01M 8/04089, B01D 53/00, B01D 53/86

(54) **FUEL CELL SYSTEM**
BRENNSTOFFZELLENSYSTEM
SYSTÈME DE PILE À COMBUSTIBLE

(30) Priority: 27.11.2014 JP 2014240374
(43) Date of publication of application: 01.06.2016
(73) Proprietor: AISIN SEIKI KABUSHIKI KAISHA, Kariya-shi, Aichi 448-8650 (JP)
(72) Inventor: AMANO, Takashi, Kariya-shi, Aichi 448-8650 (JP); HIGAKI, Katsuki, Osaka-shi, Osaka 541-0046 (JP); TAKAMI, Susumu, Osaka-shi, Osaka 541-0046 (JP)
(74) Representative: TBK

(56) References cited:
- EP-A2- 2 922 130
- JP-A- H0 927 337
- JP-A- H0 927 338
- JP-A- 2013 020 705
- US-A1- 2013 288 146

## Description

### TECHNICAL FIELD

This disclosure generally relates to a fuel cell system.

### BACKGROUND DISCUSSION

A known fuel cell system is disclosed, for example, in JP H09-27338 A. The fuel cell system disclosed in JP H09-27338 A includes a desulfurizer that desulfurizes odorant (sulfur compound) contained in source fuel such as city gas including traces of oxygen, for example, a steam reformer generating reformed gas by performing a steam reforming on the source fuel by a reforming catalyst, and a shift converter reducing a CO concentration of the reformed gas that is generated by the steam reformer. The fuel cell system performs a power generation by supplying hydrogen-rich reformed gas that is reformed via the desulfurizer, the steam reformer and the shift converter to a fuel electrode of a fuel cell. In addition, the fuel cell system includes a combustion catalyst device that removes oxygen contained in the source fuel from a supply source to send the resulting source fuel to the desulfurizer. By removing the oxygen contained in the source fuel by the combustion catalyst device, oxidation degradation of the reforming catalyst caused by oxygen may be restrained. In another fuel cell system disclosed in JP H09-27337 A, the oxygen contained in the source fuel is reduced by adding additional reformed gas to the reformed gas that is reformed via the desulfurizer.

Nevertheless, depending on a region or a community where the fuel cell system is installed, for example, different kinds of source fuel may be supplied from the supply source. For example, instead of city gas in which natural gas (methane) serves as a main component, liquefied petroleum gas mixed with air including oxygen so as to be adjusted to include substantially the same heat capacity as the city gas may be supplied to the fuel cell system. Because such liquefied petroleum gas includes propane as a main component, a carbon number per unit volume and the heat capacity of the liquefied petroleum gas may be higher than the city gas including methane as a main component. Thus, in a case where the fuel cell system is operated so as to conform to the heat capacity of the city gas, fluctuation in power generation (i.e., generated amount) of the fuel cell or coking may occur at the reformer, for example, by the supply of the liquefied petroleum gas where air is mixed.

A need thus exists for a fuel cell system that may restrain oxidation degradation caused by oxygen contained in source material and that may appropriately operate with different kinds of source material. JP 2013-20705 A satisfies this need by providing a fuel cell system comprising a fuel cell for generating electric power by a reformed gas and an oxidant gas, a reformer generating the reformed gas by a source material and water vapor, a combustion burner raising the temperature of the fuel cell at start-up by combusting the source material and sending a combustion gas to the fuel cell, an oxygen sensor detecting a concentration of oxygen in the combustion gas sent from the combustion burner, and a control unit estimating the type of the source material based on the concentration of the oxygen detected by the oxygen sensor and setting an operating condition of the reformer depending on the estimated type of the source material.

### SUMMARY

According to a first aspect of this disclosure, a fuel cell system includes a fuel cell generating an electric power by a reformed gas and an oxidant gas, an oxygen treatment device being supplied with a source material from a supply source to remove oxygen contained in the source material by a catalyst for oxygen treatment, an oxygen concentration detection device detecting a concentration of the oxygen contained in the source material, a desulfurization device being supplied with the source material after the oxygen in the source material is removed by the oxygen treatment device to remove a sulfur component contained in the source material by a desulfurization catalyst, an evaporating portion generating water vapor from water for reforming, a reforming portion generating the reformed gas by the source material which is supplied from the desulfurization device and in which the sulfur component is removed and the water vapor supplied from the evaporating portion, the reforming portion supplying the reformed gas to the fuel cell, and a control unit at least controlling the fuel cell. The control unit includes a storage portion storing a first map that indicates a first correlation between the concentration of the oxygen contained in the source material and a type of the source material, an estimation portion estimating the type of the source material based on the concentration of the oxygen detected by the oxygen concentration detection device in accordance with the first map, and an operation condition calculation portion calculating an operation condition of the fuel cell system depending on the type of the source material estimated by the estimation portion.

Accordingly, the fuel cell system may remove the oxygen contained in the source material with the usage of the catalyst for oxygen treatment by the oxygen treatment device. In addition, the control unit may estimate the type of the source material by the estimation portion based on the concentration of the oxygen detected by the oxygen concentration detection device. Further, the control unit may calculate the operation condition of the fuel cell system by the operation condition calculation portion based on the type of the source material that is estimated by the estimation portion. Accordingly, oxidation degradation of the desulfurization catalyst by the oxygen contained in the source material is restrained. Even in a case where the type of the source material varies and differs, the control unit may appropriately operate the fuel cell system.

In the first aspect of the disclosure, the oxygen concentration detection device is a temperature sensor arranged at the oxygen treatment device for detecting a temperature within the oxygen treatment device.

Accordingly, because the oxygen concentration detection device is constituted by the temperature sensor, the oxygen concentration detection device may be easily constituted at a relatively low cost.

According to a second aspect of the disclosure, the storage portion stores a second map indicating a second correlation between the type of the source material and a steam to carbon ratio that indicates a ratio of a volume of the water vapor relative to a volume of the source material supplied to the reforming portion. The operation condition calculation portion includes a steam to carbon ratio calculation portion calculating the steam to carbon ratio based on the type of the source material estimated by the estimation portion in accordance with the second map.

Accordingly, the flow rate of the water vapor may be adjusted to an appropriate flow rate depending on the type of the source material relative to the flow rate of the source material supplied to the reforming portion. A generation of coking may be restrained.

According to a third aspect of the disclosure, the fuel cell system further includes a flow rate detection device detecting a flow rate of the source material. The storage portion stores a third map indicating plural third correlations between a detected flow rate detected by the flow rate detection device and an actual flow rate of the source material based on types of the source material. The operation condition calculation portion includes a decision portion deciding one of the plural third correlations indicated by the third map, the one of the plural third correlations conforming to the type of the source material estimated by the estimation portion. The control unit includes an actual flow rate calculation portion calculating the actual flow rate based on the detected flow rate detected by the flow rate detection device in accordance with the one of the plural third correlations decided by the decision portion.

In the third aspect of the disclosure, the control unit calculates the actual flow rate depending on the type of the source material based on the detected flow rate by the actual flow rate calculation portion. Accordingly, the flow rate of the source material depending on the type of the source material may be appropriately controlled. The control unit may appropriately control the flow rate of the reformed gas supplied to the fuel cell to thereby appropriately control the power generation (i.e., generated amount) of the fuel cell.

According to a fourth aspect of the disclosure, the fuel cell system further includes a recycle fuel pipe connecting between a reformed gas supply pipe supplying the reformed gas from the reforming portion to the fuel cell and a source material supply pipe supplying the source material from the supply source to the oxygen treatment device, the recycle fuel pipe supplying a portion of the reformed gas to the oxygen treatment device as a recycle fuel. The desulfurization device removes the sulfur component contained in the source material by hydrogen included in the recycle fuel.

In a case where a superhigh-order desulfurizing agent is employed as the desulfurization catalyst performing a desulfurization with the usage of hydrogen, a possible flow of the oxygen contained in the source material to the desulfurization device may cause a combustion of the oxygen because an activating temperature of the superhigh-order desulfurizing agent is approximately 250 °C, which results in oxidation of the superhigh-order desulfurizing agent. In the fourth aspect of the disclosure, however, the oxygen contained in the source material is removed by the oxygen treatment device so that the oxygen is restrained from flowing to the desulfurization device. Thus, the oxidization of the superhigh-order desulfurizing agent may be inhibited. In addition, in a case where the superhigh-order desulfurizing agent is employed as the desulfurization catalyst, the hydrogen in the recycle fuel is utilized for the desulfurization. In this case, because the temperature within the desulfurization device is approximately 250 °C, the possible flow of the oxygen contained in the source material to the desulfurization device may cause a combustion reaction between the hydrogen and the oxygen to thereby consume the hydrogen in the recycle fuel. Thus, a desulfurizing performance of the desulfurization device may decrease because the superhigh-order desulfurizing agent is impossible to utilize the hydrogen in the recycle fuel. In the fourth aspect of the disclosure, however, because the oxygen contained in the source material is removed by the oxygen treatment device, the oxygen is retrained form flowing to the desulfurization device. The desulfurizing performance of the desulfurization device may be thus restrained from decreasing.

According to a fifth aspect of the disclosure, the fuel cell system further includes a recycle fuel pipe connecting between a reformed gas supply pipe supplying the reformed gas from the reforming portion to the fuel cell and a source material supply pipe supplying the source material from the supply source to the oxygen treatment device, the recycle fuel pipe supplying a portion of the reformed gas to the oxygen treatment device as a recycle fuel, and a flow rate regulating valve arranged at the recycle fuel pipe and configured to adjust a flow rate of the recycle fuel. The control unit secures a volume of hydrogen for a desulfurization at the desulfurization device by adjusting the flow rate of the recycle fuel by the flow rate regulating valve based on the concentration of the oxygen contained in the source material detected by the oxygen concentration detection device.

In the fifth aspect of the disclosure, the hydrogen contained in the recycle fuel and the oxygen contained in the source material react each other in the oxygen treatment device. Thus, the hydrogen contained in the recycle fuel may be consumed before the recycle fuel is supplied to the desulfurization device. Accordingly, in a case of a shortage of hydrogen for the desulfurization, the desulfurizing performance of the desulfurization device decreases. In the fifth aspect of the disclosure, however, the flow rate regulating valve configured to adjust the flow rate of the recycle fuel is provided at the recycle fuel pipe. Thus, the control unit may secure the volume of hydrogen necessary for the desulfurization at the desulfurization device by adjusting the flow rate of the recycle fuel by the flow rate regulating valve based on the concentration of the oxygen detected by the oxygen concentration detection device. Thus, a decrease of desulfurizing performance at the desulfurization device caused by a shortage of hydrogen may be restrained.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating a fuel cell system according to an embodiment disclosed here;
Fig. 2 is a diagram illustrating a relation between a temperature within an oxygen treatment device illustrated in Fig. 1 and a concentration of oxygen contained in source material;
Fig. 3 is a block diagram of the fuel cell system illustrated in Fig. 1;
Fig. 4 is a first map stored at a storage portion illustrated in Fig. 3 and indicating a first correlation between a type of the source material and the concentration of the oxygen contained in the source material;
Fig. 5 is a second map stored at the storage portion illustrated in Fig. 3 and indicating a second correlation between the type of the source material and a steam to carbon ratio;
Fig. 6 is a third map stored at the storage portion illustrated in Fig. 3 and indicating a third correlation between an actual flow rate and a detected flow rate based on the type of the source material;

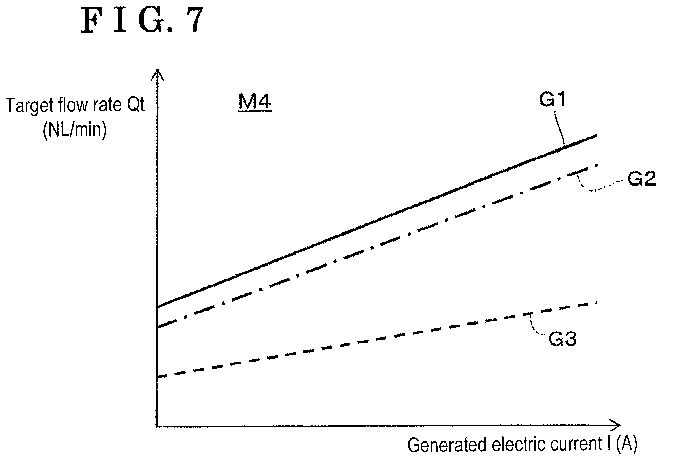

Fig. 7 is a fourth map stored at the storage portion illustrated in Fig. 3 and indicating a fourth correlation between a generated electric current of a fuel cell and a target flow rate of the source material specified on a basis of the type of the source material;
Fig. 8 is a flowchart of program executed by a control unit illustrated in Fig. 3; and
Fig. 9 is a schematic view illustrating a main portion of the fuel cell system according to a modified example of the embodiment.

### DETAILED DESCRIPTION

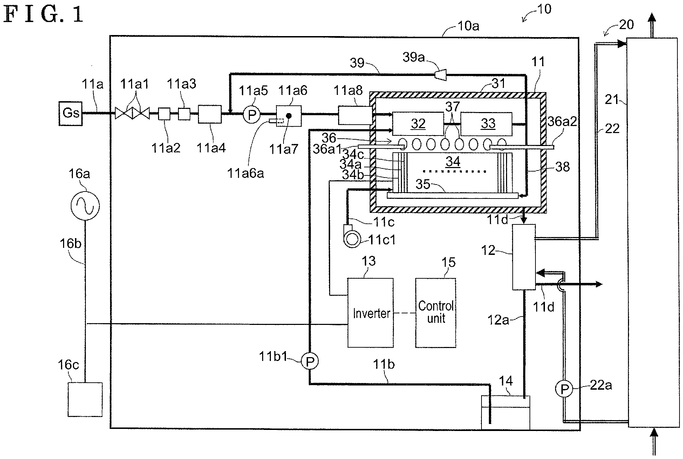

A fuel cell system according to an embodiment is explained as blow. As illustrated in Fig. 1, the fuel cell system includes a power generation unit 10 and a water storage tank 21. The power generation unit 10 includes a case 10a, a fuel cell module 11, a heat exchanger 12, an inverter device 13, a water tank 14 and a control unit 15.

The fuel cell module 11 at least includes a fuel cell 34. The fuel cell module 11 is supplied with a source material for reforming (source material), water for reforming (water) and cathode air. Specifically, the fuel cell module 11 is connected to a first end of a source material supply pipe (fuel supply pipe) 11a of which a second end is connected to a supply source Gs so that the fuel supply pipe 11a is supplied with the source material. The fuel cell module 11 is also connected to a first end of a water supply pipe 11b of which a second end is connected to the water tank 14 so that the water supply pipe 11b is supplied with the water. A water pump 11b1 is disposed at the water supply pipe 11b. The water pump 11b1, which is a water supply device for supplying the water to the fuel cell module 11, is configured to adjust a flow rate (flow rate per time unit) of the water from the water tank 14 based on a control command value from the control unit 15. The water pump 11b1 serves as a pumping device for suctioning the water to pump the water to the fuel cell module 11. The fuel cell module 11 is further connected to a first end of a cathode air supply pipe 11c of the which a second end is connected to a cathode air blower 11c1 so that the cathode air supply pipe 11c is supplied with the cathode air.

The fuel supply pipe 11a is explained in detail. A shut-off valve 11a1, a pressure sensor 11a2, a flow sensor 11a3 serving as a flow rate detection device, a pressure regulating device 11a4, a source material pump (i.e., fuel pump) 11a5, an oxygen treatment device 11a6, an oxygen concentration detection device 11a7 and a desulfurization device 11a8 are provided at the fuel supply pipe 11a in the mentioned order from an upstream side thereof. The shut-off valve 11a1, the pressure sensor 11 a2, the flow sensor 11a3, the pressure regulating device 11a4, the fuel pump 11a5, the oxygen treatment device 11a6, the oxygen concentration detection device 11a7 and the desulfurization device 11a8 are housed or accommodated within the case 10a.

The shut-off valve 11a1 is a valve (double valves) that selectively opens and closes the fuel supply pipe 11a by a command from the control unit 15. The pressure sensor 11a2 detects a pressure of the source material supplied to the fuel cell module 11 (specifically, pressure at a place where the pressure sensor 11a2 is positioned) and transmits a detection result to the control unit 15. The flow sensor 11a3 detects a flow rate (per time unit) of the source material supplied to the fuel cell module 11 and transmits a detected flow rate Qk serving as a detection result to the control unit 15.

The pressure regulating device 11a4 regulates the pressure of the source material introduced to the pressure regulating device 11a4 to a predetermined pressure and sends out the resulting source material. For example, the pressure regulating device 11a4 is constituted by a zero governor that regulates the pressure of the source material so that the source material at ambient pressure is sent out from the pressure regulating device 11a4. The pressure regulating device 11a4 is configured to regulate the pressure of the fuel supply pipe 11a at a secondary side relative to the pressure regulating device 11a4 so that the aforementioned pressure is smaller than a pressure at a recycle gas pipe 39 serving as a recycle fuel pipe. The pressure regulating device 11a4 regulates the pressure of the fuel supply pipe 11a to be lower than the pressure of the recycle gas pipe 39 so that reformed gas flows through the recycle gas pipe 39.

The fuel pump 11a5 serves as a source material (fuel) supply device for supplying fuel (source material for reforming) to the fuel cell 34. The fuel pump 11a5 adjusts the flow rate of the source material from the supply source Gs based on the control command value from the control unit 15. The fuel pump 11a5 serves as a pumping device for suctioning the source material to pump the source material to a reforming portion 33.

The oxygen treatment device 11a6 is supplied with the source material from the supply source Gs to remove oxygen contained in the source material by a catalyst for oxygen treatment. The oxygen treatment device 11a6 is also supplied with recycle gas containing hydrogen. The catalyst for oxygen treatment is obtained by noble metal such as platinum (Pt) and palladium (Pd), for example, deposited on a ceramic carrier or by a porous material formed of nonmetal such as copper (Cu) and zinc (Zn), for example, or transition metal. Hydrocarbon contained in the source material and the aforementioned hydrogen contained in the recycle gas are burnt by the catalyst for oxygen treatment to thereby remove the oxygen contained in the source material. Specifically, in a case where the source material is city gas in which natural gas (methane gas) serves as a main component, an oxidation reaction (combustion reaction) between methane, hydrogen and oxygen is generated as indicated by a chemical formula (1) and a chemical formula (2) as below.

(1) CH₄ + 2O₂ → CO₂ + 2H₂O

(2) 2H₂ + O₂ → 2H₂O

In addition, the oxygen treatment device 11a6 may include a catalytic heater 11a6a that heats the catalyst for oxygen treatment as necessary so that the temperature thereof turns to a combustion temperature of the hydrocarbon contained in the source material or the hydrogen. The catalytic heater 11a6a is an alternating current heater (AC heater serving as an alternating current auxiliary machinery) for heating by an alternating current based on a command from the control unit 15.

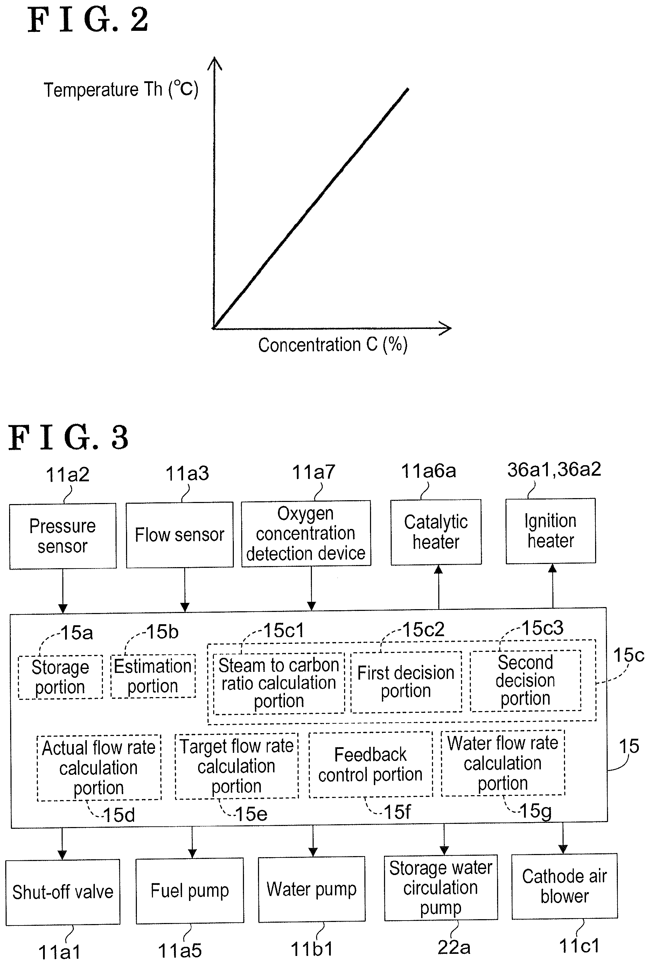

The oxygen concentration detection device 11a7 detects a concentration C of the oxygen contained in the source material. Specifically, the oxygen concentration detection device 11a7 is a temperature sensor provided at the oxygen treatment device 11a6 for detecting a temperature Th within the oxygen treatment device 11a6. The temperature Th within the oxygen treatment device 11a6 changes depending on the temperature generated by the aforementioned oxidation reaction. Changes of the temperature generated by the oxidation reaction depend on the concentration C of the oxygen contained in the source material. Specifically, as illustrated in Fig. 2, the higher the concentration C of the oxygen contained in the source material is, the higher the temperature generated by the oxidation reaction is. That is, the temperature Th within the oxygen treatment device 11a6 increases with the increase of the concentration C of the oxygen contained in the source material. The oxygen concentration detection device 11a7 detects the concentration C of the oxygen contained in the source material by detecting the temperature Th within the oxygen treatment device 11a6. The relation between the concentration C of the oxygen contained in the source material and the temperature Th within the oxygen treatment device 11a6 as illustrated in Fig. 2 is obtained in a case where the flow rate of the source material is a predetermined target flow rate Qt1. The predetermined target flow rate Qt1 corresponds to a target flow rate Qt of the source material in a case where an estimation control for estimating a type of the source material (which is explained later) is performed. The aforementioned relation illustrated in Fig. 2 is obtained beforehand by an actual measurement in an experiment, for example.

The desulfurization device 11a8 is supplied with the source material after the oxygen in the source material is removed by the oxygen treatment device 11a6. A sulfur component (for example, sulfur compound) in the source material is removed by a desulfurization catalyst at the desulfurization device 11a8. The desulfurization device 11a8 houses and accommodates therein a hydro-desulfurizing agent and a superhigh-order desulfurizing agent serving as the desulfurization catalyst. In the hydro-desulfurizing agent, the sulfur compound and the hydrogen react each other to generate hydrogen sulfide. The hydro-desulfurizing agent is, for example, a combination of nickel-molybdenum system, cobalt-molybdenum system and zinc oxide. The superhigh-order desulfurizing agent is, for example, a copper-zinc system desulfurizing agent, a copper-zinc-nickel system desulfurizing agent or the like. The superhigh-order desulfurizing agent takes in and removes the hydrogen sulfide that is converted from the sulfur compound by the hydro-desulfurizing agent. Such superhigh-order desulfurizing agent exercises an excellent desulfurizing performance at a high temperature of 200 °C to 300 °C (for example, 250 °C to 300 °C). Therefore, the desulfurization device 11a8 is arranged at a position so that the inside of the desulfurization device 11a8 is at the high temperature of 200 °C to 300 °C (for example, 250 °C to 300 °C). For example, the desulfurization device 11a8 is disposed within a casing 31 or at an outer surface of the casing 31.

As mentioned above, according to the fuel cell system of the embodiment, the hydro-desulfurizing agent and the superhigh-order desulfurizing agent are used as the desulfurization catalyst that utilizes hydrogen for desulfurization. Then, a portion of reformed gas that is reformed at the reforming portion 33 is configured to return to the fuel supply pipe 11 a. Specifically, the recycle gas pipe 39 is provided for returning the reformed gas to the fuel supply pipe 11a. A first end of the recycle gas pipe 39 is connected to a reformed gas supply pipe 38 that supplies the reformed gas from the reforming portion 33 to the fuel cell 34. A second end of the recycle gas pipe 39 is connected to an upstream position of the desulfurization device 11a8 at the fuel supply pipe 11a, i.e., specifically, to a position between a portion where the pressure regulating device 11a4 is disposed and a portion where the fuel pump 11a5 is disposed at the fuel supply pipe 11a. Accordingly, a portion of the reformed gas flowing from the reforming portion 33 through the reformed gas supply pipe 38 returns to the fuel supply pipe 11a by flowing through the recycle gas pipe 39 as recycle gas serving as recycle fuel. The reformed gas includes hydrogen (which is explained later), and therefore the recycle gas serving as the portion of the reformed gas also contains hydrogen.

Accordingly, because the recycle gas containing hydrogen returns to the fuel supply pipe 11a, the hydrogen in the recycle gas is mixed with the source material and the resulting source material is sent and supplied to the desulfurization device 11a8 through the fuel supply pipe 11a. As a result, the sulfur compound within the source material reacts with the hydrogen to generate the hydrogen sulfide. The hydrogen sulfide is removed by a chemical reaction with the superhigh-order desulfurizing agent.

An orifice 39a is provided at the recycle gas pipe 39. A flow path bore is formed at the orifice 39a so that a flow rate (i.e., flow rate per time unit) of the recycle gas that returns to the fuel supply pipe 11a via the recycle gas pipe 39 is adjusted by the flow path bore.

The heat exchanger 12 is supplied with exhaust combustion gas emitted or discharged from the fuel cell module 11 and with storage water stored at the water storage tank 21 to perform a heat exchange between the exhaust combustion gas and the storage water. Specifically, the water storage tank 21 which stores water (hot or warmed water) serving as the storage water is connected to a water circulation line 22 (storage water circulation line) where the water (storage water) circulates in a direction indicated by arrows in Fig. 1. A storage water circulation pump 22a and the heat exchanger 12 are arranged in the mentioned order from a lower end to an upper end of the water storage tank 21 at the water circulation line 22. An exhaust pipe 11d from the fuel cell module 11 is connected to the heat exchanger 12 in a penetration manner. A condensed water supply pipe 12a which is connected to the water tank 14 is connected to the heat exchanger 12.

The exhaust combustion gas from the fuel cell module 11 is led to the heat exchanger 12 by flowing through the exhaust pipe 11d and is condensed and cooled at the heat exchanger 12 because of the heat exchange with the storage water. The exhaust combustion gas after condensation flows through the exhaust pipe 11d to be discharged to the outside of the fuel cell system. Condensed water resulting from the aforementioned heat exchange flows through the condensed water supply pipe 12a so as to be supplied to the water tank 14. The water tank 14 brings the condensed water to be formed into pure water (deionized water) by means of ion-exchange resin.

The heat exchanger 12, the water storage tank 21 and the water circulation line 22 constitute an exhaust heat recovery system 20. The exhaust heat recovery system 20 recovers exhaust heat of the fuel cell module 11 and stores the exhaust heat in the storage water.

The inverter device 13 receives a direct-current (DC) voltage output from the fuel cell 34 and converts the DC voltage into a predetermined alternating-current (AC) voltage so as to output the AC voltage to a power line 16b connected to an alternating system power supply 16a (hereinafter simply referred to as a system power supply 16a) and an external electric power load 16c (hereinafter simply referred to as an external power load 16c) such as an electrical appliance, for example. The inverter device 13 also receives an AC voltage from the system power supply 16a via the power line 16b and converts the AC voltage into a predetermined DC voltage so as to output the DC voltage to an auxiliary machinery (each pump or blower) and the control unit 15. The control unit 15 drives the auxiliary machinery to thereby control the operation of the fuel cell system.

The fuel cell module 11 includes the casing 31, an evaporating portion 32, the reforming portion 33 and the fuel cell 34. The casing 31 in a box form is made of an insulative material.

The evaporating portion 32 generates water vapor from water (water for reforming). Specifically, the evaporating portion 32 which is heated by combustion gas (which is explained later) generates the water vapor by evaporating the water supplied to the evaporating portion 32. The evaporating portion 32 also preheats the source material supplied to the evaporating portion 32. The evaporating portion 32 mixes the water vapor generated in the aforementioned manner and the source material that is preheated so as to supply the mixture to the reforming portion 33. The source material corresponds to gaseous fuel (gaseous fuel for reforming) such as city gas in which natural gas (methane) serves as a main component and liquefied petroleum gas (LP gas) in which propane serves as a main component, for example, and liquid fuel (liquid fuel for reforming) such as kerosene, gasoline (petrol) and methanol, for example. In the present present embodiment, the source material is the city gas.

The evaporating portion 32 is connected to the first end of the water supply pipe 11 b of which the second end (lower end) is connected to the water tank 14. In addition, the evaporating portion 32 is connected to the first end of the fuel supply pipe 11 a of which the second end is connected to the supply source Gs. The supply source Gs corresponds to a city gas supply pipe or an LP gas cylinder, for example.

The reforming portion 33 generates the reformed gas by the source material supplied from the desulfurization device 11a8 in a state where the sulfur component is removed or eliminated from the source material and the water vapor supplied from the evaporating portion 32 so that the reformed gas is supplied to the fuel cell 34. The reforming portion 33 is heated by the combustion gas so as to receive heat necessary for a water vapor reforming reaction. The reforming portion 33 generates the reformed gas from mixed gas (source material and water vapor) supplied from the evaporating portion 32 and discharges the reformed gas. The inside of the reforming portion 33 is filled with a catalyst (catalyst for reforming), for example, with a Ru-Ni catalyst or a Pt-Rh catalyst. The mixed gas supplied from the evaporating portion 32 reacts by means of the catalyst so as to be reformed, thereby generating hydrogen gas and gas containing carbon monoxide, for example (so-called a water vapor reforming reaction). The reformed gas includes hydrogen, carbon monoxide, carbon dioxide, water vapor, natural gas (methane gas) that is not reformed, and water (water vapor) not used for reforming. The water vapor reforming reaction is an endothermic reaction.

The fuel cell 34 generates an electric power by the reformed gas and oxidant gas. The fuel cell 34 includes a lamination of plural cells 34a each including a fuel electrode, an air electrode (an oxidant electrode), and an electrolyte disposed between the fuel electrode and the air electrode. The fuel cell 34 according to the present embodiment is a solid oxide fuel cell where zirconium oxide serving as a solid oxide is used as the electrolyte. The fuel electrode of the fuel cell 34 is supplied with hydrogen, carbon monoxide, and methane gas, for example, as fuel.

A fuel flow passage 34b through which the reformed gas serving as the fuel flows is formed at the fuel electrode of each of the cells 34a. An air flow passage 34c through which the air (cathode air) serving as the oxidant gas flows is formed at the air electrode of each of the cells 34a.

The fuel cell 34 is placed on a manifold 35. The reformed gas is supplied from the reforming portion 33 to the manifold 35 via the reformed gas supply pipe 38. A lower end (first end) of the fuel flow passage 34b is connected to a fuel lead-out port formed at the manifold 35. The reformed gas led out from the fuel lead-out port of the manifold 35 is introduced from the lower end of the fuel flow passage 34b and is discharged from an upper end of the fuel flow passage 34b. The cathode air sent from the cathode air blower 11c1 flows through the cathode air supply pipe 11c so as to be supplied from a lower end of the air flow passage 34c and be discharged from an upper end of the air flow passage 34c.

A combusting portion 36 is disposed among the fuel cell 34, the evaporating portion 32, and the reforming portion 33. The combusting portion 36 heats the evaporating portion 32 and the reforming portion 33 by burning anode off-gas from the fuel cell 34 serving as the reformed gas not used in the power generation and cathode off-gas from the fuel cell 34 serving as the oxidant gas not used in the power generation. The anode off-gas is burnt at the combusting portion 36 so as to generate the combustion gas (exhaust combustion gas) (i.e., flames 37). First and second ignition heaters 36a1 and 36a2 are provided at the combusting portion 36 to ignite the combusting portion 36, i.e., ignite the anode off-gas. Each of the first and second ignition heaters 36a1 and 36a2 is an alternating-current heater (AC heater serving as an AC auxiliary machinery) which is heated by an alternating current by the command of the control unit 15.

As illustrated in Fig. 3, the pressure sensor 11a2, the flow sensor 11a3, the oxygen concentration detection device 11a7, the shut-off valve 11a1, the pumps 11a5, 11b1, 22a, the cathode air blower 11c1, the catalytic heater 11a6a and the ignition heaters 36a1, 36a2 are connected to the control unit 15. The control unit 15 includes a storage portion 15a, an estimation portion 15b, an operation condition calculation portion 15c, an actual flow rate calculation portion 15d, a target flow rate calculation portion 15e, a feedback control portion 15f and a water flow rate calculation portion 15g.

The storage portion 15a stores data used for executing control program, for example. The storage portion 15a stores a first map M1, a second map M2, a third map M3 and a fourth map M4.

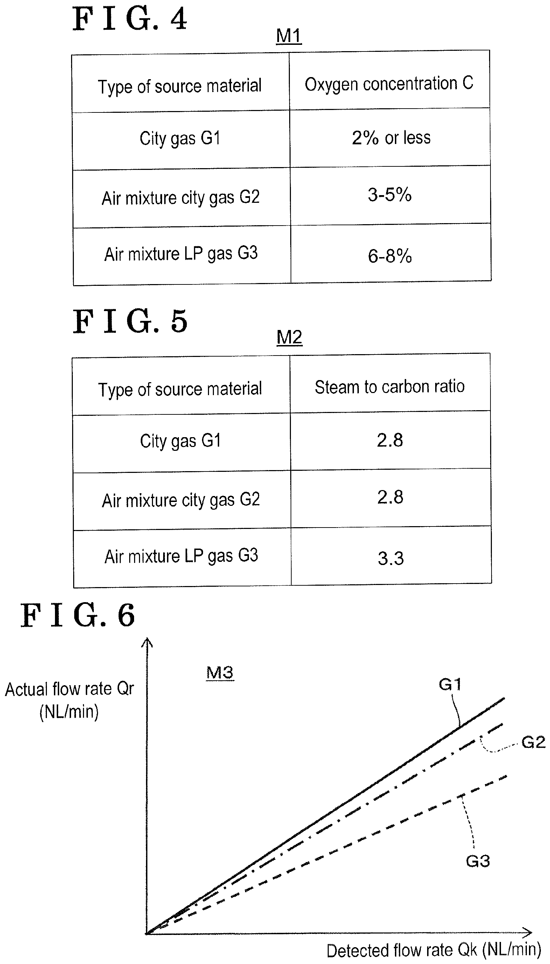

The first map M1 indicates a first correlation between the concentration C of the oxygen included in the source material and the type of the source material as illustrated in Fig. 4. Generally, the city gas (in which methane gas is a main component) as an example of the source material may be mixed with oxygen depending on a region or a community where the fuel cell system is installed, for example. In addition, depending on a region or a community where the fuel cell system is installed, the liquefied petroleum gas regulated and adjusted so as to include a heat capacity substantially the same as the city gas by mixing with air including oxygen may be employed in addition to the city gas. In the present embodiment, an explanation where a city gas G1, a city gas mixed with air (which is hereinafter referred to as air mixture city gas) G2 or a liquefied petroleum gas mixed with air (which is hereinafter referred to as air mixture LP gas) G3 is supplied to the fuel cell system is explained. In the present embodiment, the concentration C of the oxygen included in the city gas G1 is equal to or smaller than 1%, for example. The concentration C of the oxygen contained in the air mixture city gas G2 is substantially equal to 4%, for example. The concentration C of the oxygen included in the air mixture LP gas G3 is substantially equal to 7%, for example. In addition, in the present embodiment, the first correlation indicated by the first map M1 is a relation between the type of the source material supplied to the fuel cell system at a region or a community where the fuel cell system is installed and the concentration C of the oxygen. Specifically, according to the first correlation, for example, the concentration C of the oxygen is equal to or smaller than 2% in a case where the source material is the city gas G1, in a range from 3% to 5% in a case where the source material is the air mixture city gas G2, and in a range from 6% to 8% in a case where the source material is the air mixture LP gas G3.

The second map M2 indicates a second correlation between the type of the source material and a steam to carbon ratio (hereinafter referred to as a S/C ratio) indicating a ratio of a volume (i.e., flow rate per time unit) of the water vapor relative to a volume (flow rate per time unit) of the source material supplied to the reforming portion 33. The S/C ratio is a ratio of the flow rate of the water supplied to the evaporating portion 32 relative to the flow rate of the source material supplied to the reforming portion 33 (S/C ratio = (flow rate of water) / (flow rate of source material)). The S/C ratio is specified so as to inhibit coking where deposition of carbon included in the source material occurs because of a shortage of the flow rate of the water vapor relative to the flow rate of the source material. Specifically, the S/C ratio of each of the city gas G1 and the air mixture city gas G2 is specified in a range from 2.5 to 3.0, for example. The S/C ratio of the air mixture LP gas G3 is specified in a range from 3.0 to 3.5, for example. According to the second correlation indicated by the second map M2, the S/C ratio of each of the city gas G1 and the air mixture city gas G2 is 2.8 and the S/C ratio of the air mixture LP gas G3 is 3.3, for example.

The third map M3 indicates plural third correlations between the detected flow rate Qk detected by the flow sensor 11a3 and an actual flow rate Qr serving as an actual flow rate of the source material based on types of the source material. That is, the third map M3 indicates the plural third correlations between the detected flow rate Qk and the actual flow rate Qr for the city gas G1, between the detected flow rate Qk and the actual flow rate Qr for the air mixture city gas G2 and between the detected flow rate Qk and the actual flow rate Qr for the air mixture LP gas G3. The third correlations for the respective types of the source material indicated by the third map M3 are obtained beforehand by an actual measurement in an experiment, for example. In a case where the actual flow rates Qr for the respective types of the source material are compared to each other under the same detected flow rate Qk, the actual flow rate Qr is small for the source material including a large specific gravity. In the present embodiment, as illustrated in Fig. 6, because the specific gravity of the air mixture LP gas G3 is greater than the specific gravity of each of the city gas G1 and the air mixture city gas G2, the actual flow rate Qr of the air mixture LP gas G3 is smaller than the actual flow rate Qr of each of the city gas G1 and the air mixture city gas G2 under the same detected flow rate Qk. Further, because the specific gravity of the air mixture city gas G2 is greater than the specific gravity of the city gas G1, the actual flow rate Qr of the air mixture city gas G2 is smaller than the actual flow rate Qr of the city gas G1 when compared under the same detected flow rate Qk. The actual flow rate Qr in the third map M3 is measured by a flow sensor with a relatively high accuracy provided for an experiment.

The fourth map M4 indicates plural fourth correlations between a generated electric current I of the fuel cell 34 and the target flow rate Qt of the source material based on the types of the source material. That is, the fourth map M4 indicates the plural fourth correlations between the generated electric current I and the target flow rate Qt for the city gas G1, between the generated electric current I and the target flow rate Qt for the air mixture city gas G2, and between the generated electric current I and the target flow rate Qt for the air mixture LP gas G3. Regardless of the types of the source material, a supply volume (flow rate per time unit) of the reformed gas that should be supplied to the fuel cell 34 is decided depending on the generated electric current I. Specifically, the supply volume of the reformed gas necessary for the fuel cell 34 increases with the increase of the generated electric current I. At this time, depending on the types of the source material (i.e., composition of the source material), the volume of the reformed gas generated from the source material per unit volume varies and differs. Thus, the target flow rate Qt of the source material supplied to the fuel cell 34 differs depending on the types of the source material so as to achieve the necessary supply volume of the reformed gas for the generated electric current I. The fourth correlations for the respective types of the source material indicated by the fourth map M4 are obtained beforehand by an actual measurement in an experiment, for example. In the present embodiment, in a comparison under the same generated electric current I, the target flow rate Qt of the air mixture LP gas G3 is smaller than the target flow rate Qt of each of the city gas G1 and the air mixture city gas G2.

The estimation portion 15b estimates the type of the source material supplied to the fuel cell system. Specifically, the estimation portion 15b estimates the type of the source material based on the concentration C of the oxygen detected by the oxygen concentration detection device 11a7 in accordance with the first map M1.

The operation condition calculation portion 15c calculates an operation condition of the fuel cell system based on the type of the source material that is estimated by the estimation portion 15b. The operation condition calculation portion 15c includes a steam to carbon ratio calculation portion 15c1, a first decision portion 15c2 serving as a decision portion and a second decision portion 15c3.

The steam to carbon ratio calculation portion 15c1 calculates the S/C ratio as the operation condition of the fuel cell system. Specifically, the steam to carbon ratio calculation portion 15c1 calculates the S/C ratio based on the type of the source material that is estimated by the estimation portion 15b in accordance with the second map M2.

The first decision portion 15c2 decides the third correlation as the operation condition of the fuel cell system. Specifically, the first decision portion 15c2 decides one of the third correlations among the plural third correlations indicated by the third map M3 so as to conform to the type of the source material that is estimated by the estimation portion 15b.

The second decision portion 15c3 decides the fourth correlation as the operation condition of the fuel cell system. Specifically, the second decision portion 15c3 decides one of the fourth correlations among the plural fourth correlations indicated by the fourth map M4 so as to conform to the type of the source material that is estimated by the estimation portion 15b.

The actual flow rate calculation portion 15d calculates the actual flow rate Qr based on the detected flow rate Qk detected by the flow sensor 11a3 in accordance with the third correlation that is decided by the first decision portion 15c2. The target flow rate calculation portion 15e calculates the target flow rate Qt of the source material conforming to the generated electric current I of the fuel cell 34 in accordance with the fourth correlation that is decided by the second decision portion 15c3.

The feedback control portion 15f controls the fuel pump 11a5 so that the actual flow rate Qr calculated by the actual flow rate calculation portion 15d becomes equal to the target flow rate Qt of the source material calculated by the target flow rate calculation portion 15e. The feedback control portion 15f calculates a feedback amount (i.e., operation amount (revolutions) of the fuel pump 11a5) for the fuel pump 11 a5 as a control command value based on a difference between the actual flow rate Qr calculated by the actual flow rate calculation portion 15d and the target flow rate Qt of the source material calculated by the target flow rate calculation portion 15e (i.e., Qt-Qr) and outputs the calculated control command value to the fuel pump 11a5. Because a PWM control is performed on the fuel pump 11a5, the feedback amount is calculated by a duty ratio in the PWM control.

The water flow rate calculation portion 15g calculates the flow rate of the water supplied to the evaporating portion 32 based on the actual flow rate Qr calculated by the actual flow rate calculation portion 15d and the S/C ratio that is calculated by the steam to carbon ratio calculation portion 15c1. Specifically, the flow rate of the water is calculated by multiplying the actual flow rate Qr by the S/C ratio (i.e., (flow rate of water) = Qr x (S/C ratio)).

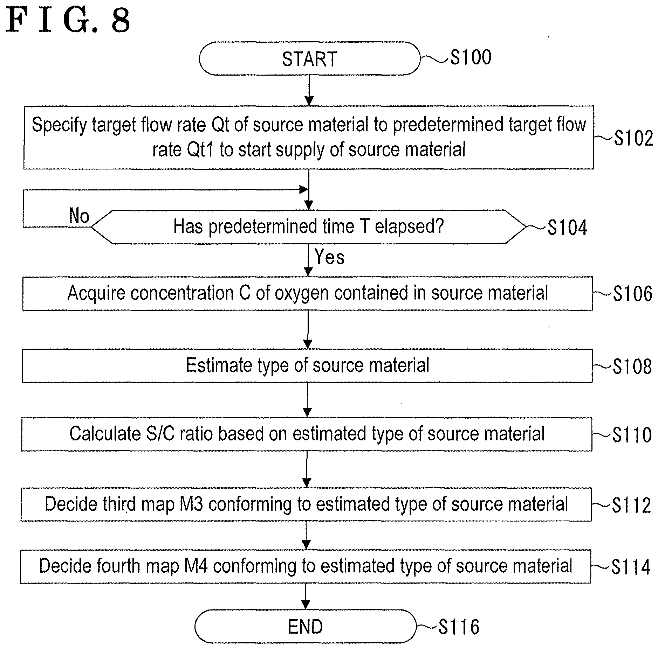

Next, a control for estimating the type of the source material supplied to the fuel cell system (i.e., estimation control) in the fuel cell system is explained with reference to a flowchart in Fig. 8. In a case where a start switch is pressed (turned on) to start the operation of the fuel cell system or the operation is started in accordance with a planned operation, the control unit 15 executes program illustrated in Fig. 8.

The control unit 15 starts the supply of the source material by specifying the target flow rate Qt of the source material to the predetermined target flow rate Qt1 in step S102. In a case where the source material is supplied to the oxygen treatment device 11a6 and the aforementioned oxidation reaction occurs by the catalyst for oxygen treatment, the temperature Th within the oxygen treatment device 11a6 increases. Then, the control unit 15 determines whether or not a predetermined time T has elapsed from a point at which the supply of the source material is started in step S104. The predetermined time T is specified from the start point of the supply of the source material to a point at which the temperature Th within the oxygen treatment device 11a6 is stabilized. The predetermined time T is obtained beforehand by an actual measurement in an experiment, for example. In a case where the predetermined time T has not elapsed, the control unit 15 repeatedly performs the determination in step S104. The control unit 15 proceeds the operation to step S106 in a case where the predetermined time T has elapsed.

The control unit 15 acquires the concentration C of the oxygen contained in the source material detected by the oxygen concentration detection device 11a7 in step S106. Then, the control unit 15 estimates the type of the source material supplied to the fuel cell system in step S108 (i.e., by the estimation portion 15b). Specifically, the control unit 15 estimates the type of the source material based on the concentration C of the oxygen in the source material calculated by the oxygen concentration detection device 11a7 in accordance with the first map M1.

The control unit 15 calculates the operation condition of the fuel cell system conforming to the type of the source material that is estimated by the estimation portion 15b. First, the control unit 15 calculates the S/C ratio based on the type of the source material estimated by the estimation portion 15b in accordance with the second map M2 in step S110 (i.e., by the steam to carbon ratio calculation portion 15c1).

In addition, the control unit 15 decides the third correlation among the plural third correlations indicated by the third map M3 so as to conform to the type of the source material estimated by the estimation portion 15b in step S112 (i.e., by the first decision portion 15c2). For example, in a case where the type of the source material estimated by the estimation portion 15b is the city gas G1, the control unit 15 decides the third correlation conforming to the city gas G1.

Further, the control unit 15 decides the fourth correlation among the plural fourth correlations indicated by the fourth map M4 so as to conform to the type of the source material estimated by the estimation portion 15b in step S114 (i.e., by the second decision portion 15c3). For example, in a case where the type of the source material estimated by the estimation portion 15b is the city gas G1, the control unit 15 decides the fourth correlation conforming to the city gas G1.

Next, a case where the aforementioned flowchart is executed in a start-up operation of the fuel cell system is explained. In addition, an example where the city gas G1 is supplied to the fuel cell system is explained. In a case where the start switch is pressed (turned on) to start the operation of the fuel cell system or the operation is started in accordance with the planned operation, the control unit 15 starts the start-up operation of the fuel cell system.

The control unit 15 supplies an electric power to the catalytic heater 11a6a when the start-up operation is started. The power supply to the catalytic heater 11a6a causes the temperature of the catalyst for oxygen treatment to increase. The control unit 15 acquires the concentration C (approximately 1 %) of the oxygen contained in the source material detected by the oxygen concentration detection device 11 a7 after the elapse of the predetermined time T from the start of the supply of the source material with the predetermined target flow rate Qt1 in steps S102 to S106. The control unit 15 estimates the type of the source material as the city gas G1 based on the concentration C of the oxygen detected by the oxygen concentration detection device 11 a7 in step S108. In addition, the control unit 15 calculates or decides the S/C ratio, the third correlation and the fourth correlation conforming to the city gas G1 in steps S110 to S114. The control unit 15 calculates the actual flow rate Qr by the actual flow rate calculation portion 15d from the detected flow rate Qk in accordance with the third correlation conforming to the city gas G1. The control unit 15 controls the fuel pump 11a5 by the feedback control portion 15f so that the actual flow rate Qr becomes equal to the predetermined target flow rate Qt1.

After the supply of the source material is started in step S102, the control unit 15 ignites the ignition heaters 36a1 and 36a2 to thereby burn or combustion the gas sent from the fuel cell 34 at the combusting portion 36. Further, the control unit 15 supplies the water to the evaporating portion 32 by controlling the water pump 11b1. At this time, the control unit 15 calculates the flow rate of the water by the water flow rate calculation portion 15g by multiplying the actual flow rate Qr which is calculated by the actual flow rate calculation portion 15d by the S/C ratio conforming to the city gas G1 (i.e., (flow rate of water) = Qr x (S/C ratio)). Accordingly, the water with the flow rate conforming to the city gas G1 is supplied to the evaporating portion 32. Because a PWM control is performed on the water pump 11 b1, the control command value to the water pump 11b1 is calculated by a duty ratio in the PWM control.

In a case where the temperature of the reforming portion 33 that is heated by the combusting portion 36 reaches a predetermined temperature (approximately 350 °C, for example), the temperature of the recycle gas reaches substantially the predetermined temperature. In a case where the temperature of the recycle gas is equal to the predetermined temperature, the oxygen contained in the source material is removed by the oxidation reaction between the hydrogen contained in the recycle gas and the oxygen within the oxygen treatment device 11a6. Further, in a case where the temperature of the fuel cell 34 reaches a predetermined operation temperature (approximately 600 °C, for example), the control unit 15 stops the start-up operation and starts a power generation operation.

The control unit 15 controls a generated electric power of the fuel cell 34 to be equal to a consumed power of the external power load 16c during the power generation operation of the fuel cell system (i.e., performs a load following control). Specifically, based on the consumed power of the external power load 16c, the generated electric power and further the generated electric current I of the fuel cell 34 are decided. The target flow rate calculation portion 15e of the control unit 15 calculates the target flow rate Qt of the city gas G1 based on the generated electric current I of the fuel cell 34 that is decided as above, in accordance with the fourth map M4. The control unit 15 controls the fuel pump 11a5 by the feedback control portion 15f so that the actual flow rate Qr becomes equal to the target flow rate Qt of the city gas G1 that is calculated by the target flow rate calculation portion 15e. The control unit 15 controls the water pump 11b1 with the flow rate of the water calculated by the water flow rate calculation portion 15g based on the actual flow rate Qr and the S/C ratio conforming to the city gas G1.

In a case where the source material is the air mixture city gas G2, the source material is estimated to be the air mixture city gas G2 by the estimation portion 15b in step S108. Then, the control unit 15 estimates the operation condition of the fuel cell system conforming to the air mixture city gas G2 in steps S110 to S114 and controls the operation of the fuel cell system in the same way as the case where the source material is the city gas G1 as mentioned above.

In a case where the source material is the air mixture LP gas G3, the source material is estimated to be the air mixture LP gas G3 by the estimation portion 15b in step S108. Then, the control unit 15 estimates the operation condition of the fuel cell system conforming to the air mixture LP gas G3 in steps S110 to S114 and controls the operation of the fuel cell system in the same way as the case where the source material is the city gas G1 as mentioned above.

According to the present embodiment, the fuel cell system includes the fuel cell 34 generating an electric power by the reformed gas and the oxidant gas, the oxygen treatment device 11a6 being supplied with the source material from the supply source Gs to remove tge oxygen contained in the source material by the catalyst for oxygen treatment, the oxygen concentration detection device 11a7 detecting the concentration C of the oxygen contained in the source material, the desulfurization device 11a8 being supplied with the source material after the oxygen in the source material is removed by the oxygen treatment device 11a6 to remove the sulfur component contained in the source material by the desulfurization catalyst, the evaporating portion 32 generating the water vapor from the water for reforming, the reforming portion 33 generating the reformed gas by the source material which is supplied from the desulfurization device 11a8 and in which the sulfur component is removed and the water vapor supplied from the evaporating portion 32, the reforming portion 33 supplying the reformed gas to the fuel cell 34, and the control unit 15 at least controlling the fuel cell 34. The control unit 15 includes the storage portion 15a storing the first map M1 that indicates the first correlation between the concentration C of the oxygen contained in the source material and the type of the source material, the estimation portion 15b estimating the type of the source material based on the concentration C of the oxygen detected by the oxygen concentration detection device 11a7 in accordance with the first map M1 (step S108), and the operation condition calculation portion 15c calculating the operation condition of the fuel cell system depending on the type of the source material estimated by the estimation portion 15b. Accordingly, the fuel cell system may remove the oxygen contained in the source material with the usage of the catalyst for oxygen treatment by the oxygen treatment device 11a6. In addition, the control unit 15 may estimate the type of the supplied source material by the estimation portion 15b based on the concentration C of the oxygen detected by the oxygen concentration detection device 11a7. Further, the control unit 15 may calculate the operation condition of the fuel cell system by the operation condition calculation portion 15c based on the type of the source material that is estimated by the estimation portion 15b. Accordingly, the oxidation degradation of the desulfurization catalyst and the reforming catalyst by the oxygen contained in the source material is restrained. Even in a case where the type of the source material varies and differs, the control unit 15 may appropriately operate the fuel cell system.

In addition, the oxygen concentration detection device 11a7 is a temperature sensor arranged at the oxygen treatment device 11a6 for detecting the temperature Th within the oxygen treatment device 11a6. Accordingly, because the oxygen concentration detection device 11a7 is constituted by the temperature sensor, the oxygen concentration detection device 11a7 may be easily constituted at a relatively low cost.

Further, the storage portion 15a stores the second map M2 indicating the second correlation between the type of the source material and the steam to carbon ratio that indicates the ratio of the volume of the water vapor relative to the volume of the source material supplied to the reforming portion 33. The operation condition calculation portion 15c includes the steam to carbon ratio calculation portion 15c1 calculating the steam to carbon ratio based on the type of the source material estimated by the estimation portion 15a in accordance with the second map M2 (step S110). The control unit 15 calculates the S/C ratio depending on the type of the source material by the steam to carbon ratio calculation portion 15c1. Accordingly, the flow rate of the water vapor may be adjusted to an appropriate flow rate depending on the type of the source material relative to the flow rate of the source material supplied to the reforming portion 33. The generation of coking may be restrained.

The fuel cell system further includes the flow sensor 11 a3 detecting the flow rate of the source material. The storage portion 15a stores the third map M3 indicating the plural third correlations between the detected flow rate Qk detected by the flow sensor 11 a3 and the actual flow rate Qr of the source material based on the types of the source material. The operation condition calculation portion 15c includes the decision portion 15c2 deciding one of the plural third correlations indicated by the third map M3, the one of the plural third correlations conforming to the type of the source material estimated by the estimation portion 15a (step S112). The control unit 15 includes the actual flow rate calculation portion 15d calculating the actual flow rate Qr based on the detected flow rate Qk detected by the flow sensor 11a3 in accordance with the one of the plural third correlations decided by the decision portion 15c2. The control unit 15 calculates the actual flow rate Qr depending on the type of the source material based on the detected flow rate Qk by the actual flow rate calculation portion 15d. Accordingly, the flow rate of the source material depending on the type of the source material may be appropriately controlled. The control unit 15 may appropriately control the flow rate of the reformed gas supplied to the fuel cell 34 to thereby appropriately control the power generation (i.e., generated amount) of the fuel cell 34.

The fuel cell system further includes the recycle gas pipe 39 connecting between the reformed gas supply pipe 38 supplying the reformed gas from the reforming portion 33 to the fuel cell 34 and the fuel supply pipe 11 a supplying the source material from the supply source Gs to the oxygen treatment device 11a6, the recycle gas pipe 39 supplying a portion of the reformed gas to the oxygen treatment device 11a6 as the recycle fuel. The desulfurization device 11a8 removes the sulfur component contained in the source material by the hydrogen included in the recycle fuel. In a case where the superhigh-order desulfurizing agent is employed as the desulfurization catalyst performing the desulfurization with the usage of hydrogen, the possible flow of the oxygen contained in the source material to the desulfurization device 11a8 may cause a combustion of the oxygen because an activating temperature of the superhigh-order desulfurizing agent is approximately 250 °C, which results in oxidation of the superhigh-order desulfurizing agent. In the present embodiment, however, the oxygen contained in the source material is removed by the oxygen treatment device 11a6 so that the oxygen is restrained from flowing to the desulfurization device 11a8. Thus, the oxidization of the superhigh-order desulfurizing agent may be inhibited. In addition, in a case where the superhigh-order desulfurizing agent is employed as the desulfurization catalyst, the hydrogen in the recycle gas is utilized for the desulfurization. In this case, because the temperature within the desulfurization device 11a8 is approximately 250 °C, the possible flow of the oxygen contained in the source material to the desulfurization device 11a8 may cause the combustion reaction between the hydrogen and the oxygen to thereby consume the hydrogen in the recycle gas. Thus, the desulfurizing performance of the desulfurization device 11a8 may decrease because the superhigh-order desulfurizing agent is impossible to utilize the hydrogen in the recycle gas. In the present embodiment, however, because the oxygen contained in the source material is removed by the oxygen treatment device 11a6, the oxygen is retrained form flowing to the desulfurization device 11a8. The desulfurizing performance of the desulfurization device 11a8 may be thus restrained from decreasing.

In the aforementioned embodiment, the operation condition calculation portion 15c of the control unit 15 calculates the S/C, for example, as the operation condition of the fuel cell system. In addition to the S/C, the temperature of each portion (i.e., fuel cell 34, reforming portion 33 and the like) of the fuel cell module 11 conforming to the type of the source material and the temperature of the water supplied to the evaporating portion 32, for example, may be calculated. In this case, plural maps indicating correlations between the type of the source material and the temperature of each portion of the fuel cell module 11 and between the type of the source material and the temperature of the water supplied to the evaporating portion 32, for example, may be stored at the storage portion 15a. The control unit 15 calculates the temperature of each portion of the fuel cell module 11 and the temperature of the water supplied to the evaporating portion 32, for example, by the operation condition calculation portion 15c based on the type of the source material estimated by the estimation portion 15b in accordance with the aforementioned plural maps. The control unit 15 may appropriately operate the fuel cell system in a case where the type of the source material varies and differs.

In addition, in the embodiment, the control unit 15 executes the flowchart illustrated in Fig. 8 during the start-up operation of the fuel cell system. Alternatively, the control unit 15 may execute the flowchart illustrated in Fig. 8 periodically (for example, every 24 hours) during the power generation operation of the fuel cell system.

Further, in the present embodiment, the hydro-desulfurizing agent and the superhigh-order desulfurizing agent are accommodated within the desulfurization device 11a8 as the desulfurization catalyst. Alternatively, a normal temperature desulfurizing agent for removing the sulfur component contained in the source material without the usage of hydrogen may be accommodated within the desulfurization device 11a8 as the desulfurization catalyst. The normal temperature desulfurizing agent is, for example, zeolite. The sulfur component in the source material is removed by being adsorbed to zeolite. When the normal temperature desulfurizing agent is employed, the recycle gas pipe 39 and/or the pressure regulating device 11a4 may be eliminated.

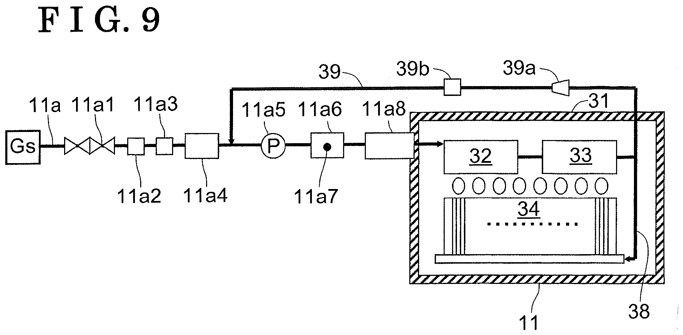

Furthermore, in the present embodiment, the fuel cell system may additionally include a flow rate regulating valve 39b at the recycle gas pipe 39 as illustrated in Fig. 9 so that the flow rate of the recycle gas is adjustable by the command from the control unit 15. The flow rate regulating valve 39b is, for example, a needle valve. In the oxygen treatment device 11a6, the hydrogen contained in the recycle gas and the oxygen contained in the source material react each other. Thus, the hydrogen contained in the recycle gas may be consumed before the recycle gas is supplied to the desulfurization device 11a8. Accordingly, in a case of a shortage of hydrogen for the desulfurization, the desulfurizing performance of the desulfurization device 11a8 decreases. In a case where the flow rate regulating valve 39b configured to adjust the flow rate of the recycle gas is provided at the recycle gas pipe 39, however, the control unit 15 may secure the volume of hydrogen necessary for the desulfurization at the desulfurization device 11a8 by adjusting the flow rate of the recycle gas by the flow rate regulating valve 39b based on the concentration C of the oxygen detected by the oxygen concentration detection device 11a7. Thus, the decrease of desulfurizing performance at the desulfurization device 11a8 caused by a shortage of hydrogen may be restrained.

Furthermore, in the present embodiment, the catalytic heater 11a6a of the oxygen treatment device 11a6 may be eliminated or omitted in the fuel cell system. In this case, the oxygen treatment device 11a6 may be arranged at a portion (for example, within the casing 31) where the temperature Th within the oxygen treatment device 11a6 reaches a certain temperature (for example, approximately 200 °C for propane) at which the oxidation reaction between the hydrocarbon and the oxygen contained in the source material occurs. In a case of the elimination or omission of the catalytic heater 11a6a of the oxygen treatment device 11a6, the oxygen treatment device 11a6 may be disposed at a portion (for example, outer surface of the casing 31) where the temperature Th within the oxygen treatment device 11a6 reaches a certain temperature (for example, approximately 100 °C) at which the oxidation reaction between the hydrogen and the oxygen occurs. In this case, the temperature of the catalyst for oxygen treatment at the oxygen treatment device 11a6 may increase by the oxidation reaction between the hydrogen and the oxygen contained in the recycle gas.

## Claims

1. A fuel cell system comprising:
a fuel cell (34) generating an electric power by a reformed gas and an oxidant gas;
an oxygen treatment device (11a6) being supplied with a source material from a supply source (Gs) to remove oxygen contained in the source material by a catalyst for oxygen treatment;
a desulfurization device (11a8) being supplied with the source material after the oxygen in the source material is removed by the oxygen treatment device (11a6) to remove a sulfur component contained in the source material by a desulfurization catalyst;
a reforming portion (33) generating the reformed gas by the source material which is supplied from the desulfurization device (11a8) and in which the sulfur component is removed and water vapor, the reforming portion (33) supplying the reformed gas to the fuel cell (34); and
a control unit (15) at least controlling the fuel cell (34),
**characterized by**
an oxygen concentration detection device (11a7) detecting a concentration (C) of the oxygen contained in the source material, said oxygen concentration detection device (11a7) being a temperature sensor arranged at the oxygen treatment device (11a6) for detecting a temperature (Th) within the oxygen treatment device (11a6); and
an evaporating portion (32) generating the water vapor from water for reforming,
wherein the control unit (15) includes:
a storage portion (15a) storing a first map (M1) that indicates a first correlation between the concentration (C) of the oxygen contained in the source material and a type of the source material;
an estimation portion (15b) estimating the type of the source material based on the concentration (C) of the oxygen detected by the oxygen concentration detection device (11a7) in accordance with the first map (M1); and
an operation condition calculation portion (15c) calculating an operation condition of the fuel cell system depending on the type of the source material estimated by the estimation portion (15b).

2. The fuel cell system according to claim 1, wherein
the storage portion (15a) stores a second map (M2) indicating a second correlation between the type of the source material and a steam to carbon ratio that indicates a ratio of a volume of the water vapor relative to a volume of the source material supplied to the reforming portion (33), and
the operation condition calculation portion (15c) includes a steam to carbon ratio calculation portion (15c1) calculating the steam to carbon ratio based on the type of the source material estimated by the estimation portion (15a) in accordance with the second map (M2).

3. The fuel cell system according to either claim 1 or claim 2, further comprising a flow rate detection device (11a3) detecting a flow rate of the source material, wherein
the storage portion (15a) stores a third map (M3) indicating a plurality of third correlations between a detected flow rate (Qk) detected by the flow rate detection device (11a3) and an actual flow rate (Qr) of the source material based on types of the source material,
the operation condition calculation portion (15c) includes a decision portion (15c2) deciding one of the plurality of third correlations indicated by the third map (M3), the one of the plurality of third correlations conforming to the type of the source material estimated by the estimation portion (15a), and
the control unit (15) includes an actual flow rate calculation portion (15d) calculating the actual flow rate (Qr) based on the detected flow rate (Qk) detected by the flow rate detection device (11a3) in accordance with the one of the plurality of third correlations decided by the decision portion (15c2).

4. The fuel cell system according to any one of claims 1 through 3, further comprising a recycle fuel pipe (39) connecting between a reformed gas supply pipe (38) supplying the reformed gas from the reforming portion (33) to the fuel cell (34) and a source material supply pipe (11a) supplying the source material from the supply source (Gs) to the oxygen treatment device (11a6), the recycle fuel pipe (39) supplying a portion of the reformed gas to the oxygen treatment device (11a6) as a recycle fuel, wherein
the desulfurization device (11a8) removes the sulfur component contained in the source material by hydrogen included in the recycle fuel.

5. The fuel cell system according to any one of claims 1 through 4, further comprising:
a recycle fuel pipe (39) connecting between a reformed gas supply pipe (38) supplying the reformed gas from the reforming portion (33) to the fuel cell (34) and a source material supply pipe (11a) supplying the source material from the supply source (Gs) to the oxygen treatment device (11a6), the recycle fuel pipe (39) supplying a portion of the reformed gas to the oxygen treatment device (11a6) as a recycle fuel; and
a flow rate regulating valve (39b) arranged at the recycle fuel pipe (39) and configured to adjust a flow rate of the recycle fuel, wherein
the control unit (15) secures a volume of hydrogen for a desulfurization at the desulfurization device (11a8) by adjusting the flow rate of the recycle fuel by the flow rate regulating valve (39b) based on the concentration (C) of the oxygen contained in the source material detected by the oxygen concentration detection device (11a7).

## Patentansprüche

1. Brennstoffzellensystem mit:
einer Brennstoffzelle (34), die durch ein reformiertes Gas und ein Oxidationsmittelgas elektrischen Strom erzeugt;
einer Sauerstoffbehandlungsvorrichtung (11a6), die von einer Versorgungsquelle (Gs) mit einem Ausgangsmaterial versorgt wird, um Sauerstoff, der in dem Ausgangsmaterial enthalten ist, durch einen Katalysator zur Sauerstoffbehandlung zu entfernen;
einer Entschweflungsvorrichtung (11a8), die mit dem Ausgangsmaterial versorgt wird, nachdem durch die Sauerstoffbehandlungsvorrichtung (11a6) der Sauerstoff in dem Ausgangsmaterial entfernt wurde, um einen Schwefelbestandteil, der in dem Ausgangsmaterial enthalten ist, durch einen Entschweflungskatalysator zu entfernen;
einem Reformierabschnitt (33), der das reformierte Gas durch das Ausgangsmaterial, das aus der Entschweflungsvorrichtung (11a8) zugeführt wird und in dem der Schwefelbestandteil entfernt ist, und Wasserdampf erzeugt, wobei der Reformierabschnitt (33) das reformierte Gas der Brennstoffzelle (34) zuführt; und
einer Steuerungseinheit (15), die zumindest die Brennstoffzelle (34) steuert,
**gekennzeichnet durch**
eine Sauerstoffkonzentration-Erfassungsvorrichtung (11a7), die eine Konzentration (C) des im Ausgangsmaterial enthaltenen Sauerstoffs erfasst, wobei die Sauerstoffkonzentration-Erfassungsvorrichtung (11a7) ein Temperatursensor ist, der an der Sauerstoffbehandlungsvorrichtung (11a6) angeordnet ist, um eine Temperatur (Th) innerhalb der Sauerstoffbehandlungsvorrichtung (11a6) zu erfassen; und
einen Verdampfungsabschnitt (32), der den Wasserdampf zum Reformieren aus Wasser erzeugt,
wobei die Steuerungseinheit (15) Folgendes aufweist:
einen Speicherabschnitt (15a), der ein erstes Kennfeld (M1) speichert, der eine erste Korrelation zwischen der Konzentration (C) des im Ausgangsmaterial enthaltenen Sauerstoffs und einer Art des Ausgangsmaterials angibt;
einen Schätzabschnitt (15b), der in Übereinstimmung mit dem ersten Kennfeld (M1) beruhend auf der **durch** die Sauerstoffkonzentration-Erfassungsvorrichtung (11a7) erfassten Konzentration (C) des Sauerstoffs die Art des Ausgangsmaterials schätzt; und
einen Betriebsbedingung-Berechnungsabschnitt (15c), der abhängig von der **durch** den Schätzabschnitt (15b) geschätzten Art des Ausgangsmaterials eine Betriebsbedingung des Brennstoffzellensystems berechnet.

2. Brennstoffzellensystem nach Anspruch 1, wobei
der Speicherabschnitt (15a) ein zweites Kennfeld (M2) speichert, das eine zweite Korrelation zwischen der Art des Ausgangsmaterials und einem Dampf-zu-Kohlenstoff-Verhältnis angibt, das ein Verhältnis eines Volumens des Wasserdampfs bezogen auf ein Volumen des dem Reformierabschnitt (33) zugeführten Ausgangsmaterials angibt, und
der Betriebsbedingung-Berechnungsabschnitt (15c) einen Dampf-zu-Kohlenstoff-Verhältnis-Berechnungsabschnitt (15c1) beinhaltet, der in Übereinstimmung mit dem zweiten Kennfeld (M2) beruhend auf der durch den Schätzabschnitt (15a) geschätzten Art des Ausgangsmaterials das Dampf-zu-Kohlenstoff-Verhältnis berechnet.

3. Brennstoffzellensystem nach entweder Anspruch 1 oder Anspruch 2, mit zudem einer Durchflussmengen-Erfassungsvorrichtung (11a3), die eine Durchflussmenge des Ausgangsmaterials erfasst, wobei
der Speicherabschnitt (15a) ein drittes Kennfeld (M3) speichert, das eine Vielzahl von dritten Korrelationen zwischen einer erfassten Durchflussmenge (Qk), die durch die Durchflussmengen-Erfassungsvorrichtung (11a3) erfasst wird, und einer auf Arten des Ausgangsmaterials beruhenden Ist-Durchflussmenge (Qr) des Ausgangsmaterials angibt,
der Betriebsbedingung-Berechnungsabschnitt (15c) einen Entscheidungsabschnitt (15c2) beinhaltet, der sich für eine der Vielzahl von dritten Korrelationen entscheidet, die durch das dritte Kennfeld (M3) angegeben werden, wobei die eine der Vielzahl von dritten Korrelationen der durch den Schätzabschnitt (15a) geschätzten Art des Ausgangsmaterials entspricht, und
die Steuerungseinheit (15) einen Ist-Durchflussmengen-Berechnungsabschnitt (15a) beinhaltet, der in Übereinstimmung mit der einen der Vielzahl von dritten Korrelationen, für die sich der Entscheidungsabschnitt (15c2) entschieden hat, beruhend auf der erfassten Durchflussmenge (Qk), die durch die Durchflussmengen-Erfassungsvorrichtung (11a3) erfasst wird, die Ist-Durchflussmenge (Qr) berechnet.

4. Brennstoffzellensystem nach einem der Ansprüche 1 bis 3, mit zudem einem Rückführungsbrennstoffrohr (39), das zwischen einem Reformiergaszufuhrrohr (38), das der Brennstoffzelle (34) das reformierte Gas aus dem Reformierabschnitt (33) zuführt, und einem Ausgangsmaterialzufuhrrohr (11a), das der Sauerstoffbehandlungsvorrichtung (11a6) das Ausgangsmaterial aus der Versorgungsquelle (Gs) zuführt, eine Verbindung herstellt, wobei das Rückführungsbrennstoffrohr (39) der Sauerstoffbehandlungsvorrichtung (11a6) einen Teil des reformierten Gases als einen Rückführungsbrennstoff zuführt, wobei
die Entschweflungsvorrichtung (11a8) den im Ausgangsmaterial enthaltenen Schwefelbestandteil durch Wasserstoff entfernt, der im Rückführungsbrennstoff enthalten ist.

5. Brennstoffzellensystem nach einem der Ansprüche 1 bis 4, mit zudem:
einem Rückführungsbrennstoffrohr (39), das zwischen einem Reformiergaszufuhrrohr (38), das der Brennstoffzelle (34) das reformierte Gas aus dem Reformierabschnitt (33) zuführt, und einem Ausgangsmaterialzufuhrrohr (11a), das der Sauerstoffbehandlungsvorrichtung (11a6) das Ausgangsmaterial aus der Versorgungsquelle (Gs) zuführt, eine Verbindung herstellt, wobei das Rückführungsbrennstoffrohr (39) der Sauerstoffbehandlungsvorrichtung (11a6) einen Teil des reformierten Gases als einen Rückführungsbrennstoff zuführt; und
einem Durchflussmengen-Regulierventil (39b), das am Rückführungsbrennstoffrohr (39) angeordnet ist und so gestaltet ist, dass es eine Durchflussmenge des Rückführungsbrennstoffs einstellt, wobei
die Steuerungseinheit (15) ein Volumen an Wasserstoff für eine Entschwefelung an der Entschwefelungsvorrichtung (11a8) sicherstellt, indem sie durch das Durchflussmengen-Regulierventil (39b) beruhend auf der durch die Sauerstoffkonzentration-Erfassungsvorrichtung (11a7) erfassten Konzentration (C) des im Ausgangsmaterial enthaltenen Sauerstoffs die Durchflussmenge des Rückführungsbrennstoffs einstellt.

## Revendications

1. Système de pile à combustible comprenant :
une pile à combustible (34) générant une énergie électrique à l'aide d'un gaz reformé et d'un gaz oxydant ;
un dispositif de traitement par oxygène (11a6) alimenté en matière première par une source d'alimentation (Gs) afin d'éliminer l'oxygène contenu dans la matière première grâce à un catalyseur de traitement par oxygène ;
un dispositif de désulfuration (11a8) alimenté en matière première après que l'oxygène présent dans la matière première a été éliminé par le dispositif de traitement par oxygène (11a6) afin d'éliminer un composant soufré contenu dans la matière première grâce à un catalyseur de désulfuration ;
une partie de reformage (33) générant le gaz reformé par la matière première qui est fournie par le dispositif de désulfuration (11a8), et dans laquelle le composant sulfuré est supprimé, et de la vapeur d'eau, la partie de reformage (33) fournissant le gaz reformé à la pile à combustible (34) ;
et
une unité de commande (15) contrôlant au moins la pile à combustible (34),
**caractérisé par**
un dispositif de détection de concentration en oxygène (11a7) détectant une concentration (C) en oxygène contenue dans la matière première, ledit dispositif de détection de concentration en oxygène (11a7) étant un capteur de température prévu au niveau du dispositif de traitement par oxygène (11a6) afin de détecter une température (Th) à l'intérieur du dispositif de traitement par oxygène (11a6) ; et
une partie d'évaporation (32) générant de la vapeur d'eau à partir de l'eau destinée au reformage,
dans lequel l'unité de commande (15) comprend :
une partie de stockage (15a) stockant une première représentation graphique (M1) qui indique une première corrélation entre la concentration (C) en oxygène contenue dans la matière première et le type de matière première ;
une partie d'estimation (15b) estimant le type de matière première sur la base de la concentration (C) en oxygène détectée par le dispositif de détection de concentration en oxygène (11a7) selon la première représentation graphique (M1) ; et
une partie de calcul de condition de fonctionnement (15c) calculant la condition de fonctionnement du système de pile à combustible en fonction du type de matière première estimé par la partie d'estimation (15b).

2. Système de pile à combustible selon la revendication 1, dans lequel
la partie de stockage (15a) stocke une seconde représentation graphique (M2) indiquant une seconde corrélation entre le type de matière première et un rapport vapeur/carbone qui indique un rapport entre un volume de vapeur d'eau et un volume de matière première fourni à la partie de reformage (33), et
la partie de calcul de condition de fonctionnement (15c) comprend une partie de calcul de rapport vapeur/carbone (15c1) destinée à calculer le rapport vapeur/carbone sur la base du type de matière première estimé par la partie d'estimation (15a) selon la seconde représentation graphique (M2).

3. Système de pile à combustible selon soit la revendication 1 ou la revendication 2, comprenant en outre un dispositif de détection de débit (11a3) destiné à détecter un débit de la matière première, dans lequel
la partie de stockage (15a) stocke une troisième représentation graphique (M3) indiquant une pluralité de troisièmes corrélations entre un débit détecté (Qk) détecté par le dispositif de détection de débit (11a3) et un débit réel (Qr) de matière première sur la base des types de matière première,
la partie de calcul de condition de fonctionnement (15c) comprend une partie de décision (15c2) décidant de l'une des pluralités de troisièmes corrélations indiquées par la troisième représentation graphique (M3), l'une des pluralités de troisièmes corrélations se conformant au type de matière première estimé par la partie d'estimation (15a), et
l'unité de commande (15) comprend une partie de calcul de débit réel (15d) calculant le débit réel (Qr) sur la base du débit détecté (Qk) détecté par le dispositif de détection de débit (11a3) selon l'une de la pluralité de troisièmes corrélations décidées par la partie de décision (15c2).

4. Système de pile à combustible selon l'une quelconque des revendications 1 à 3, comprenant en outre un tuyau de recyclage de combustible (39) relié entre un tuyau d'alimentation en gaz reformé (38) fournissant le gaz reformé qui provient de la partie de reformage (33) à la pile à combustible (34) et un tuyau d'alimentation en matière première (11a) fournissant la matière première qui provient de la source d'alimentation (Gs) au dispositif de traitement par oxygène (11a6), le tuyau de recyclage de combustible (39) fournissant une partie du gaz reformé au dispositif de traitement par oxygène (11a6) en guise de combustible recyclé, dans lequel
le dispositif de désulfuration (11a8) élimine le composant sulfuré contenu dans la matière première grâce à l'hydrogène inclus dans le combustible recyclé.

5. Système de pile à combustible selon l'une quelconque des revendications 1 à 4, comprenant en outre :
un tuyau de recyclage de combustible (39) relié entre un tuyau d'alimentation en gaz reformé (38) fournissant le gaz reformé qui provient de la partie de reformage (33) à la pile à combustible (34) et un tuyau d'alimentation en matière première (11a) fournissant la matière première qui provient de la source d'alimentation (Gs) au dispositif de traitement par oxygène (11a6), le tuyau de recyclage de combustible (39) fournissant une partie du gaz reformé au dispositif de traitement par oxygène (11a6) en guise de combustible recyclé ; et
une soupape de régulation du débit (39b) prévue au niveau du tuyau de recyclage de combustible (39) et configurée pour régler le débit du combustible recyclé, dans lequel
l'unité de commande (15) garantit un volume d'hydrogène pour la désulfuration au niveau du dispositif de désulfuration (11a8) en réglant le débit du combustible recyclé à l'aide de la soupape de régulation du débit (39b) sur la base de la concentration (C) en oxygène contenue dans la matière première détectée par le dispositif de détection de concentration en oxygène (11a7).
